# EUROPEAN PATENT APPLICATION

(11) **EP 4 644 095 A1**
(43) Date of publication of application: **05.11.2025**
(21) Application number: 25168621.8
(22) Date of filing: 04.04.2025
(51) Int. Cl.: B29C 65/10, B29C 65/50, B29C 65/00, B65B 65/00, B31B 50/10, B29C 65/78, B29L 31/00

(54) **SYSTEM AND METHOD FOR HEATING A PACKAGING WEB, PACKAGING MACHINE AND COMPUTER PROGRAM PRODUCT THEREOF**

(30) Priority: 03.05.2024 IT 202400009955
(71) Applicant: Tetra Laval Holdings & Finance S.A., 1009 Pully (CH)
(72) Inventor: DONATI, Andrea, 41123 MODENA (IT); MEO, Emanuele Antonino, 41123 MODENA (IT); GINEPRI, Stefano, 41123 MODENA (IT); POPPI, Marco, 41123 MODENA (IT)
(74) Representative: Tetra Pak Patent Attorneys

(57) **Abstract**

System **(100)** for heating a longitudinal edge of a packaging web **(101)** advancing along an advancement path **(FD)** and comprising: a heating element **(103)** configured to heat the packaging web **(101);** and an actuating apparatus **(104)** coupled to the heating element **(103)** and comprising an actuator **(105)** configured to synchronize a movement of the heating element **(103)** with the movement of the packaging web **(101).**

## Description

### TECHNICAL FIELD OF THE INVENTION

The invention relates generally to packaging technology. More particularly, the present invention relates to systems and methods for heating a packaging web, in particular a longitudinal edge thereof, more in particular for longitudinally sealing opposite edges of a packaging web to form packages, more in particular to adjust the position of an heating element to synchronize a movement of the heating element with the movement of the packaging web along the advancement path to allow the longitudinal sealing of the opposite edges of the packaging web, as well as packaging machines and computer program products thereof.

### STATE OF THE ART

As is known, many liquid or pourable food products, such as fruit juice, UHT (ultra-high-temperature treated) milk, wine, tomato sauce, *etc.,* are sold in packages made of sterilized packaging material.

A typical example is the parallelepiped-shaped package for liquid or pourable food products known as Tetra Brik Aseptic^{®}, which is made by sealing and folding a laminated packaging material.

The packaging material has a multilayer sheet structure substantially comprising one or more stiffening and strengthening base layers typically made of a fibrous material, *e.g.* paper or cardboard, or mineral-filled polypropylene material, covered on both sides with one or more heat-seal plastic material layers, *e.g.* polyethylene film. In the case of aseptic packages for long-storage products, such as UHT milk, the packaging material also comprises a gas- and light-barrier material layer, *e.g.* aluminum foil or ethyl vinyl alcohol (EVOH) film, which is superimposed on a heat-seal plastic material layer, and is in turn covered with another heat-seal plastic material layer forming the inner face of the package eventually contacting food product.

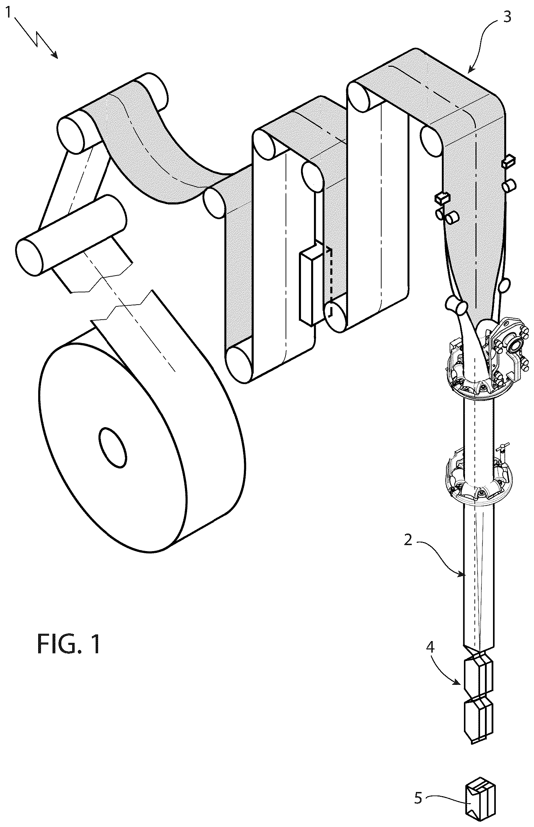

Packages of this type are normally produced on fully automatic packaging machines, also known as packaging or filling machines, of the type shown in Figure 1 as a nonlimiting example and referenced as a whole with reference numeral **1,** where a continuous vertical tube **2** is formed from a packaging web **3,** which is sterilized by applying, *e.g.* a chemical sterilizing agent such as a hydrogen peroxide solution, or physical sterilization, such as by means of an electron beam. Once sterilization is completed, any residue, in particular left by the chemical sterilizing agent, is removed, *e.g.* evaporated by heating, from the surfaces of the packaging material. The packaging web **3** is maintained in a closed, sterile environment, in particular within an isolation chamber and is folded and then heat-sealed longitudinally to form the vertical tube **2.**

The vertical tube **2** is filled with a sterilized or sterile-processed pourable food product by means of a filling pipe extending inside the vertical tube **2.** The vertical tube **2** is advanced along a vertical advancing direction to a forming station, where it is gripped along equally spaced transversal sections by a jaw system including two or more pairs of jaws acting cyclically and successively on the vertical tube **2** to form a continuous sequence of packs, here pillow packs, **4** connected to one another by transverse sealing bands. The packs **4** are then separated from one another by cutting the sealing bands and are conveyed to a folding station, where they are folded mechanically into finished, *e.g.* substantially parallelepiped-shaped, packages or food packages **5.**

### OBJECT AND SUMMARY OF THE INVENTION

The Applicant has noted that, even though the known solutions work satisfyingly well, a need is felt to find alternative solutions to reduce an exposure of the packaging material to the heating element due to a movement of the packaging material at the heating element. For example, this may occur during variations in speed of the advancing web, *e.g.* due to transients or events, or in case the edge of the packaging web moves, *e.g.* in case of tube twisting.

Thus, a desire is felt in the sector to provide for and optimize systems and methods for facilitating minimizing overheating in case such movements occur, *e.g.* by synchronizing a movement of the heating element with the movement of the packaging web along the advancement path for the following formation of the packages.

The aim of the present invention is hence to develop systems and methods for heating a packaging web, in particular a longitudinal edge thereof, more in particular for longitudinally sealing opposite edges of a packaging web to form packages, in particular to adjust the position of an heating element to synchronize a movement of the heating element with the movement of the packaging web along the advancement path to allow the longitudinal sealing of the opposite edges of the packaging web, thereby solving at least part of the abovementioned inconveniences.

This aim is achieved by the present invention, that relates to a system and a method for heating a packaging web, in particular a longitudinal edge thereof, more in particular for longitudinally sealing opposite edges of a packaging web to form packages, more in particular to adjust the position of an heating element to synchronize a movement of the heating element with the movement of the packaging web along the advancement path to allow the longitudinal sealing of the opposite edges of the packaging web, as well as packaging machines and computer program products thereof, as claimed in the appended claims.

### BRIEF DESCRIPTION OF THE DRAWINGS

Figure 1 shows a perspective view, with parts removed for clarity, of a packaging machine operable to produce sealed packages containing pourable food products from a tube of packaging material.
Figure 2 shows a perspective view of a system for heating a packaging web according to the present invention.
Figure 3 shows a top view of the system of Figure 2.
Figure 4 schematically shows a portion of the system of Figures 2 and 3 when a step of the heat-sealing process of a sealing strip is carried out on a packaging web.

### DETAILED DESCRIPTION OF THE INVENTION

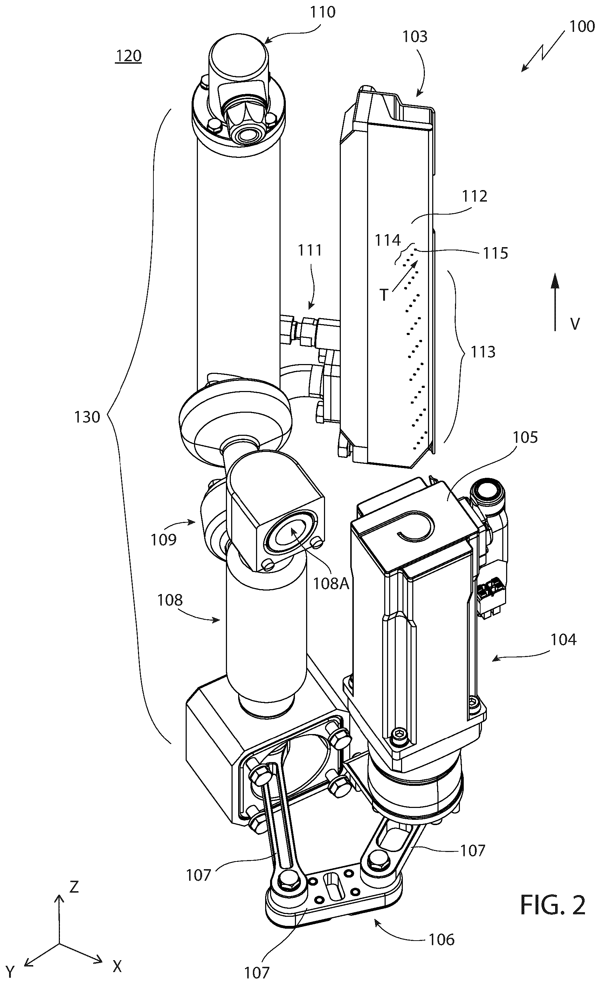

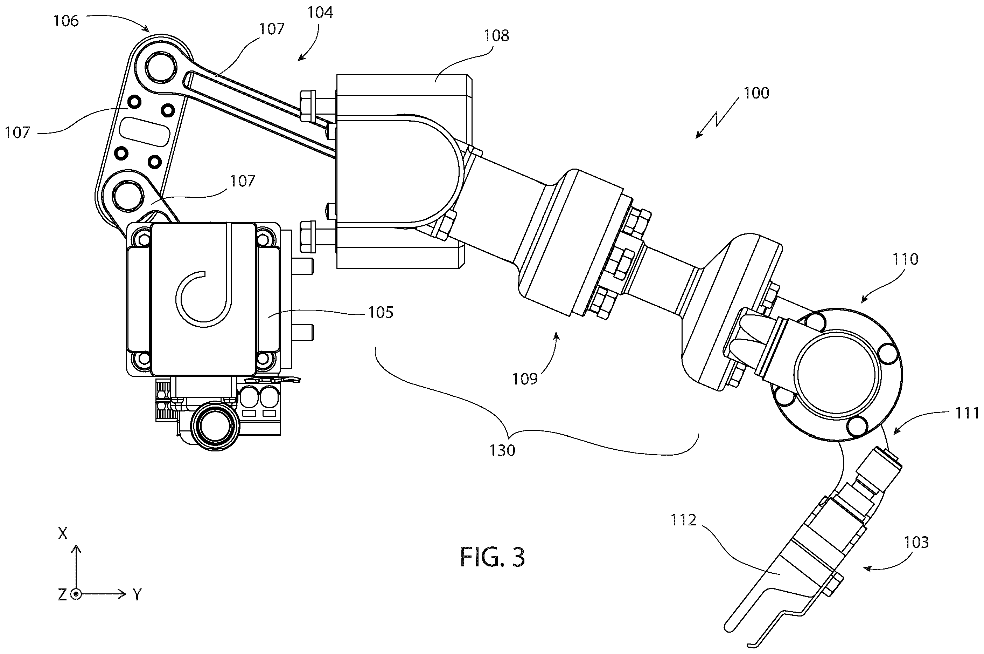

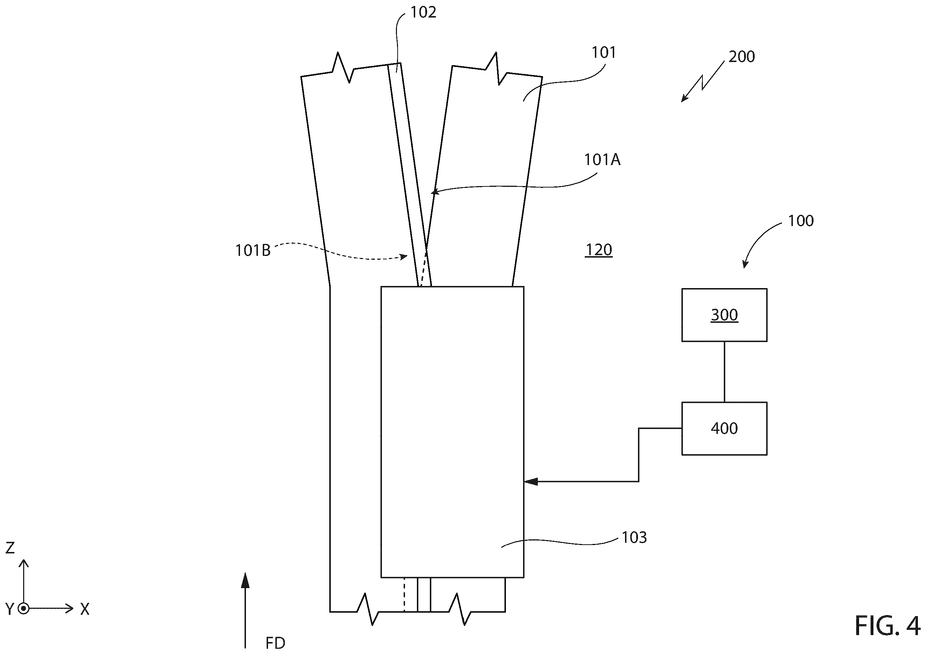

Figures 2 and 3 show a system **100** for heating a packaging web **101,** in particular a (longitudinal) edge **101A, 101B** thereof (see Figure 4), advancing along an advancement path **FD** (shown schematically in Figure 4), in particular for sealing a sealing strip **102** on the packaging web **101;** in particular, the system **100** is configured to be housed at least in part in an aseptic chamber **120** of a packaging machine **200,** the latter being configured to form packages. According to an aspect of the present invention, the sealing strip **102** is applied to longitudinally seal opposite edges of the packaging web **101,** thereby implementing a longitudinal sealing.

In particular, the system **100** comprises:
- a heating element **103** configured to heat the packaging web **101;** and
- an actuating apparatus **104** coupled to the heating element **103** and configured to synchronize a movement of the heating element **103** with the movement of the packaging web **101.**

It is noted that the synchronization of the movement of the heating element **103** and the movement of the packaging web **101** may be along the advancement path **FD** (as shown in Figure 4, here parallel to a Z axis of a Cartesian reference system XYZ) and/or in any other direction transversal to the advancement path **FD** (here, a direction parallel either to a X axis or to a Y axis of the Cartesian reference system XYZ). To allow a better understanding of the present invention, in the following, reference will be made to a synchronization of the movements of the heating element **103** and of the packaging web **101** along the advancement path **FD.**

According to an aspect of the present invention, the heating element **103** is air-based, *i.e.* the heating element **103** is configured to heat the packaging web **101** by feeding a flow of heated air from the heating element **103** towards the packaging web **101,** in particular towards at least one of the edges **101A, 101B** of the packaging web **101.** Optionally, the heating element **103** is configured to heat both edges **101A, 101B** of the packaging web **101** (see Figure 4).

The actuating apparatus **104** comprises an actuator **105** configured to adjust a position of the heating element **103** based on the position of an edge **101A, 101B** of the packaging web **101,** in particular the portion of the packaging web **101** to be heated for carrying out the heat-sealing process of the sealing strip **102** to the packaging web **101,** and/or the speed of the advancing packaging web **101.** More in particular, according to an aspect of the present invention, the actuator **105** is a servo motor, in particular a four-bar mechanism with a servo-driven crank; in this way, it is possible to precisely know the position of the heating element **103** and, thus, move the latter towards or away from the packaging web **101** at any stage, *i.e.* even when the packaging web **101** is about to move, is moving or is slowing down. This also brings about the advantage of precisely knowing how much heat a portion of the packaging web **101** is receiving and, thus, adjusting the position of the heating element **103** accordingly, thereby avoiding for example overheating.

In further detail, according to an aspect of the present invention, the actuating apparatus **104,** in particular the actuator **105,** is in communication with one or more electronic processing resources **400** (Figure 4), *e.g*. an electronic control unit thereof, configured to provide a command for automatically moving the heating element **103,** in particular when it is determined that a distance between the heating element **103** and the edge **101A** and/or the edge **101B** reaches a predetermined threshold, as better described in the following paragraphs. According to a further aspect of the present invention, the actuator **105** is configured to move the heating element **103** upon receiving a command from a user or operator, *e.g*. through a user terminal or human-machine interface (HMI), when it is determined that a distance between the heating element **103** and the edge **101A** and/or the edge **101B** reaches a predetermined threshold, as better described in the following paragraphs. In the latter case, thus, the HMI is configured to receive an input from an operator and, thus, the actuating apparatus **104** is configured to automatically adjust a position of the heating element **103** as a function of the operator input; in this way, in certain situations, for example during installation of the packaging machine **200** or during an operation check, the operator can remotely adapt the position of the heating element **103** without physically accessing the aseptic chamber **120.**

In further detail, according to an aspect of the present invention, the position of the edge **101A, 101B** of the packaging web **101** is predetermined and inputted by an operator.

According to a preferred embodiment of the present invention, the system **100** comprises a sensory system **300** (schematically shown in Figure 4) configured to acquire the position of the edge **101A** and/or the edge **101B** of the packaging web **101** and/or the speed of the same packaging web **101** (for example, the sensory system **300** comprises a speed sensor, for example an encoder, to acquire said speed) and generate a corresponding output indicative of the edge position, in particular to be transmitted to the one or more electronic processing resources **400,** coupled to the sensory system **300** and, in general, to the system **100,** and/or to the HMI; thus, the actuating apparatus **104** is configured to adjust the position of the heating element **103** as a function of said output. Thus, upon receipt of the position of the edge **101A** and/or the edge **101B** of the packaging web **101,** *i.e*. the output generated by the sensory system **300,** according to an aspect of the present invention, the actuating apparatus **104** is configured to automatically synchronize the movement of the heating element **103** with the movement of the packaging web **101** as a function of said output, *i.e.* the position of the heating element **103** is automatically adjusted, in particular through a command generated by the one or more electronic processing resources **400** after processing the abovementioned position and imparting said command to the actuating apparatus **104;** according to a further aspect of the present invention, the position of the heating element **103** is adjusted through a command imparted to the actuating apparatus **104** by a user through the HMI upon receiving *e*.*g*. a notification related to the determined position of the edge **101A, 101B** and/or the speed of the packaging web **101.**

According to an aspect of the present invention, the abovementioned steps for positioning the heating element **103** based on the determined position of the edge **101A, 101B** and/or the speed of the advancing packaging web **101** are carried out substantially continuously, *i.e.* the sensory system **300** acquires the position of the edge **101A, 101B** and/or the speed of the advancing packaging web **101** according to a sampling frequency **f** so that the actuating apparatus **104,** in particular the actuator **105,** may adjust the position of the heating element **103** according to the output generated by the sensory system **300** at each time instant, thereby implementing a constant control of the position of the heating element **103** with respect to the position of the edge **101A, 101B.**

It is also noted that the actuator **105** is configured to position the heating element **103** at the packaging web **101** when the same packaging web **101** starts moving and/or to position the heating element **103** away from the packaging web **101** when a speed of the packaging web **101** reaches a predetermined non-null speed, *i.e.* when the speed of the packaging web **101** decreases. In further detail, the predetermined non-null speed is calculated based on one or more among a dimension of the packaging web **101,** a standard operating speed of the advancing packaging material web **101,** a parameter indicative of the air flow directed towards the packaging web **101.**

According to a further aspect of the present invention, the actuating apparatus **104,** in particular the actuator **105,** is configured to adjust a position of the heating element **103** while the advancement of the packaging web **101** also as a function of a longitudinal sealing quality inspection performed on a package produced from the packaging web **101,** *i.e.* at the end of the production process; in this way, it is possible to adjust the heating element **103** while the packaging web **101** still advances along the advancement path **FD** also according to the results obtained in the previous processes and thus reducing the incidence of errors in the formation of packages.

According to another aspect of the present invention, the system **100** also comprises:
- a valve (not shown) configured to adjust the air flow to be fed for heating the longitudinal edge of the packaging web **101,** *i.e.* to be fed to the system **100;** and
- a valve actuator (not shown) coupled to the valve and configured to adjust a position of the valve to control the air flow based on the movement of the packaging web **101,** *i.e.* the position of the edge **101A, 101B** and/or the speed of the advancing packaging web **101.**

In particular, the valve is configured to move from a first operational position or closed position wherein the air flow is substantially blocked (non-null) to a second operational position or open position wherein the air flows into the aseptic chamber **120** and vice versa. Thus, the valve actuator is configured to move the valve from the first to the second operational position and vice versa, for example under a command from the one or more electronic processing resources and/or the command of a user, for example given through the HMI.

Referring to Figures 2 and 3, the actuating apparatus **104** also comprises a movement apparatus **106,** in particular comprising one or more movement modules **107** (three shown in Figures 2 and 3) mechanically and movably coupled with each other, in particular with coupling means, here screws, and the actuator **105.** In particular, the movement apparatus **106** is configured to transmit the movement imparted by the actuator **105** to the heating element **103.**

Furthermore, the system **100** also comprises an air feeding element **108** coupled to the actuator **105** in particular through the movement apparatus **106** and configured to receive an air flow from an external apparatus (not shown) at an opening **108A** of the same air feeding element **108.**

The system **100** also comprises a heater **110** coupled to the air feeding element **108** through a first fluidic line **109;** in particular, the first fluidic line **109** is configured to allow the air to flow from the air feeding element **108** to the heater **110.**

The heater **110** is configured to heat the air from the air feeding element **108** before providing it to the heating element **103.**

According to an aspect of the present invention, the heating element **103** comprises:
- a main body **112,** here extending along a first, vertical direction **V,** here parallel to a Z axis of a Cartesian reference system; and
- a plurality of nozzles **113** extending at least along a portion of the main body **112** along the first, vertical direction **V** and configured to provide the heated air to the packaging web **101** to carry out the heat-sealing process of the sealing strip **102** to the same packaging web **101.**

It is noted that the term "nozzle" hereinafter refers to the assembly comprising at least the following elements:
- a through hole from which air is fed from the heating element **103** towards the packaging web **101;** and
- air feeding devices (e.g. shared for the different through holes) in fluidic communication with the holes and configured to direct the heated air from the heating element **103** to the packaging web **101** to heat the latter as anticipated in the previous paragraphs.

As anticipated above, the movement apparatus **106** is configured to transmit the movement imparted by the actuator **105** to the heating element **103;** in further detail, when the actuating apparatus **104** determines that the distance between the edge **101A, 101B** of the packaging web **101** and the heating element **103** (an offset between the former and the latter) reaches a predetermined threshold distance, the actuating apparatus **104** is configured to move the unit **130** to adjust the position of the heating element **103** with respect to the edge **101A, 101B** of the packaging web **101.** Given that the position of the heating element **103** can be adjusted continuously, the actuating apparatus **104** is thus configured to synchronize the movement of the heating element **103** and the movement of the packaging web **101.**

The heating element **103** can be positioned according to the determined position of the edge **101A, 101B** and/or the speed of the packaging web **101;** such positioning is carried out by means of the actuating apparatus **104,** which, as also anticipated above, moves the unit **130** so that the heating element **103** is correctly positioned for the plurality of nozzles **113** to be able to heat the packaging web 101. In addition or alternatively, the heating element **103** can be positioned according to a user input.

During the heat-sealing process, the position of the edge **101A, 101B** and/or the speed of the packaging web **101** can be constantly monitored, namely by means of the sensory system **300** or via the quality check performed on the sealed packages; the user input and/or the output relating to the position of the edge **101A, 101B** and/or the speed of the packaging web **101** may be provided so that the actuating apparatus **104** may adjust the position of the heating element **103.**

When it is determined that the distance between the heating element **103** and the edge **101A, 101B** reaches the predetermined threshold, for example because the packaging web **101** and, consequently, the respective edge **101A** moves from the original position, the actuating apparatus **104** is configured to automatically move the unit **130** so that the heating element **103** is positioned to compensate such movement, thereby synchronizing the position of the edge **101A, 101B** with the position of the heating element **103** and, more in particular, the position of the plurality of nozzles **113** with respect to the advancing packaging web **101.** In any case, the synchronization of the movement of the heating element **103** and of the packaging web **101** allows to compensate the offset between the positions of the heating element **103** and of the edge **101A, 101B,** if such offset reaches a predetermined threshold, without interrupting the normal functioning of the packaging machine **200,** thereby allowing a continuous production of the packages.

Once the heat-sealing process is completed, the packaging web **101** proceeds to the following stages of the packaging machine **200** to complete the formation of the packages.

The advantages that the present invention allows to achieve may be readily appreciated by the skilled person.

In particular, the present invention guarantees repeatability, as well as an accurate positioning control of the heating element **103,** especially in case of tube twisting or during events such as transients, start-and-stop and the like, thereby improving the heat pattern quality resulting from the heat-sealing.

Furthermore, the present invention allows to precisely monitor the position of the edge **101A, 101B** and/or the speed of the packaging web **101** and, thus, the working position for the heat-sealing process; such control may be automatic, *i.e.* the position is automatically adjusted by the actuating apparatus **104,** or manual, *i.e.* a user manually compensates the position.

The present invention may also be advantageously used in case of irregularities in the packaging web, *e.g*. splice events, packaging web width variation etc.

Furthermore, the present invention allows to improve the lifetime of the sealing strip **102,** as the heat-sealing process is improved by actively and dynamically controlling the position of the heating element **103.**

In conclusion, from the description above follows that, although various embodiments of the invention have been described and shown, the invention is not restricted thereto, but may also be embodied in other ways within the scope of the subject-matter defined in the following claims.

According to an aspect of the present description, as previously discussed, the actuator **105** is configured to adjust a position of the heating element **103** along a direction transversal to the advancement path **FD** of the packaging material. The heating element **103** may move towards and away from the packaging web **101.** In particular, the actuator **105** may be configured to selectively increase or reduce a distance between the heating element **103** and the packaging web **101.**

## Claims

1. System (**100**) for heating an edge of a packaging web (**101**) advancing along an advancement path (**FD**) and comprising:
- a heating element (**103**) configured to heat the packaging web (**101**); and
- an actuating apparatus (**104**) coupled to the heating element (**103**) and comprising an actuator (**105**) configured to synchronize a movement of the heating element (**103**) with the movement of the packaging web (**101**).

2. The system (**100**) according to claim 1, wherein the actuator (**105**) is configured to adjust a position of the heating element (**103**) based on the position of an edge (**101A, 101B**) of the packaging web (**101**) and/or the speed of the advancing packaging web (**101**).

3. The system (**100**) according to claim 2, comprising a sensory system (**300**), preferably a vision system, configured to acquire data indicative of the position of the edge (**101A, 101B)** of packaging web (**101)** and/or of the speed of the advancing packaging web (**101**) and generate a corresponding output indicative of the edge position and/or the speed, wherein the actuating apparatus (**104**) is configured to adjust a position of the heating element (**103**) as a function of said output.

4. The system (100) according to claim 3, wherein the actuating apparatus (104) is configured to automatically synchronize the movement of the heating element (103) with the movement of the packaging web (101) as a function of said output.

5. The system (100) according to any of the previous claims, wherein the actuator (105) is a servo motor.

6. The system (100) according to claim 5, wherein the servo motor is configured to position the heating element (103) at the packaging web (101) when the packaging web (**101**) starts moving and/or to position the heating element (**103**) away from the packaging web (**101**) when a speed of the packaging web (**101**) reaches a predetermined non-null speed.

7. The system (**100**) according to claim 6, wherein the predetermined non-null speed is calculated based on one or more of a dimension of the packaging web (**101**), a standard operating speed of the advancing packaging material web (**101**), a parameter indicative of the air flow directed towards the packaging web (**101**), a composition of the packaging web (**101**) and/or a speed of the packaging web (**101**).

8. The system (**100**) according to any of the previous claims, wherein the actuating apparatus (104) is configured to adjust a position of the heating element (**103**) during the advancement of the packaging web (**101**) also as a function of a longitudinal sealing quality inspection performed on a package produced from the packaging web (**101**).

9. The system (**100**) according to any of the previous claims, comprising a human machine interface configured to receive an input from an operator, wherein the actuating apparatus (104) is configured to automatically adjust a position of the heating element (**103**) as a function of the operator input.

10. The system (**100**) according to any one of the preceding claims and further comprising:
- a valve configured to adjust the air flow to be fed for heating the longitudinal edge of the packaging web (**101**); and
- a valve actuator coupled to the valve and configured to adjust a position of the valve to control the air flow based on the movement of the packaging web.

11. The system (**100**) according to any one of the preceding claims, wherein the actuator (**105**) is configured to adjust a position of the heating element (**103**) along a direction transversal to the advancement path (**FD**), preferably towards and away from the packaging web (**101**).

12. Method for heating a longitudinal edge of a packaging web (**101**) advancing along an advancement path (**FD**) carried out by a system (**100**) for heating the packaging web (**101**) advancing along the advancement path (**FD**) according to any one of claims 1-10 and comprising:
- synchronizing a movement of a heating element (**103**) based on the movement of the packaging web (**101**) along the advancement path (**FD**); and
- heating the packaging web (**101**).

13. The method according to claim 12 and comprising adjusting a position of the heating element (**103**) based on the position of an edge (**101A**) of the packaging web (**101**) and/or based on a speed of the advancing packaging web (**101**).

14. Packaging machine (**200**) for forming packages from a packaging web (**101**), each package being filled with a pourable product,
wherein the packaging machine (**200**) comprises a system (**100**) for heating a packaging web (**101**) advancing along an advancement path (**FD**) according to any one of claims 1-11 synchronize a movement of the heating element (**103**) with the movement of the packaging web (**101**) along the advancement path (**FD**).

15. Computer program product loadable and executable by a system (**100**) for heating a packaging web (**101**) advancing along an advancement path (**FD**) according to any one of claims **1-10** and configured to make, when executed, the system (**100**) to operate as according to a method for heating a packaging web (**101**) advancing along an advancement path (FD) according to any one of claims 13-14.
